# EUROPEAN PATENT SPECIFICATION

(11) **EP 4 269 706 B1**
(45) Date of publication and mention of the grant of the patent: **23.09.2026**
(21) Application number: 21910275.3
(22) Date of filing: 07.12.2021
(51) Int. Cl.: E02F 9/00, B60R 16/02

(54) **CONSTRUCTION MACHINE**
BAUMASCHINE
ENGIN DE CHANTIER

(30) Priority: 22.12.2020 JP 2020212336
(43) Date of publication of application: 01.11.2023
(73) Proprietor: Yanmar Holdings Co., Ltd., Osaka-shi, Osaka 530-0013 (JP)
(72) Inventor: OTSUKA Yosuke, Chikugo-shi, Fukuoka 833-0055 (JP)
(74) Representative: Sekiguchi, Kazuya
(86) International application number: PCT/JP2021/044834
(87) International publication number: WO 2022/138126

(56) References cited:
- WO-A1-2009/017018
- JP-A- 2009 035 956
- JP-A- 2013 087 542
- JP-A- 2013 091 927
- JP-A- 2013 189 785
- JP-A- 2015 137 524
- JP-A- 2018 135 702
- JP-A- 2018 135 702
- JP-A- H10 322 915
- US-A1- 2007 163 826

## Description

### TECHNICAL FIELD

The present invention relates to a construction machine.

### BACKGROUND ART

In a construction machine described in Patent Document 1, a fuel tank is arranged adjacent to the front of an engine arranged at a rear portion, and a battery and a fuse box are arranged at the side of the fuel tank. Patent Document 2 discloses a rotation type working vehicle in which at least an engine and a radiator that are mounted on a rotation table are covered with a hood, an opening for outwardly discharging cooling air having cooled the radiator is formed in the hood, and a duct is provided between the opening and the radiator.

### PRIOR ART DOCUMENT

### PATENT DOCUMENT

Patent Document 1: JP-A-2007-77700
Patent Document 2: WO 2009/107018 A1

### SUMMARY OF INVENTION

### TECHNICAL PROBLEM

In the construction machine described in Patent Document 1, not only a harness connecting an engine-related electric device to the battery and the fuse box is long, but also it is hard to say that the space of an engine room housing the engine is effectively utilized.

An object of the present invention is to provide a construction machine of which the component layout efficiency in an engine room is improved.

### SOLUTION TO PROBLEM

The construction machine of the present invention includes an engine, a cooling fan, a hood, a heat exchanger, a partition plate, a battery, and a fuse box. The engine has an electric device. The cooling fan is assembled to the engine. The hood has an exhaust opening. The heat exchanger is arranged between the cooling fan and the exhaust opening. The partition plate forms an air discharge passage between the heat exchanger and the exhaust opening. The battery is arranged in a space below the partition plate. The fuse box is connected to a circuit connecting the electric device and the battery to each other. The fuse box is arranged between the battery and the partition plate.

### ADVANTAGEOUS EFFECTS OF INVENTION

According to the present invention, the construction machine of which the component layout efficiency in the engine room is improved is provided.

### BRIEF DESCRIPTION OF DRAWINGS

Fig. 1 is a side view showing an example of a construction machine according to an embodiment.
Fig. 2 is a view showing an example of the appearance of a right rear portion of an upper turning body.
Fig. 3 is a plan view schematically showing an example of component arrangement in an engine room.
Fig. 4 is a view showing an example of arrangement of a battery and a fuse box.
Fig. 5 is an enlarged perspective view of the battery and the fuse box.
Fig. 6 is a view showing another example of the arrangement of the battery and the fuse box.
Fig. 7 is a view showing the battery and the fuse box of Fig. 6 from another direction.
Fig. 8 is an enlarged perspective view of a hydraulic oil tank and the fuse box.
Fig. 9 is an enlarged perspective view of the fuse box and a mounting bracket.

### DESCRIPTION OF EMBODIMENTS

An embodiment of the present invention will be described with reference to the drawings. Note that in the drawings, the same reference numerals are used to represent the same or equivalent elements and description thereof will not be repeated.

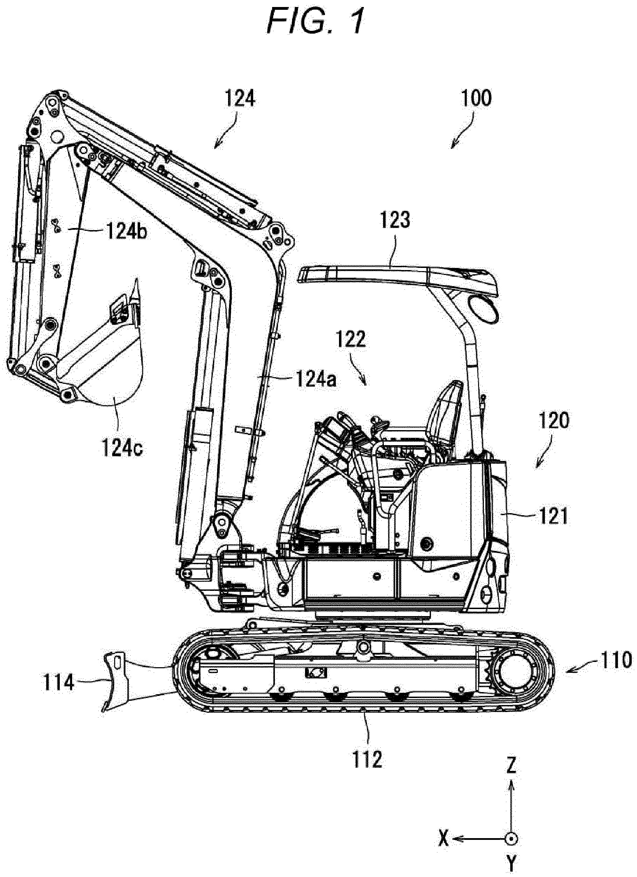

A construction machine 100 according to the embodiment will be described with reference to Fig. 1. Fig. 1 is a side view showing an example of the construction machine 100. The construction machine 100 is, for example, an excavator. For the sake of convenience, in Fig. 1, a direction from the right to the left is a positive direction of an X-axis, a direction from the rear to the front is a positive direction of a Y-axis, and a direction from the bottom to the top is a positive direction of a Z-axis.

As shown in Fig. 1, the construction machine 100 includes a lower traveling body 110 and an upper turning body 120. The upper turning body 120 is turnable relative to the lower traveling body 110.

The lower traveling body 110 includes a traveling mechanism 112 and a blade 114. The traveling mechanism 112 is of a crawler type. The blade 114 is used for a soil discharging work and a ground leveling work.

The upper turning body 120 includes a hood 121, a steering unit 122, a canopy 123, and a work machine 124.

The hood 121, the steering unit 122, and the canopy 123 are arranged on an upper portion of the upper turning body 120. The hood 121 forms a substantially semi-cylindrical exterior of the upper turning body 120. The steering unit 122 enables an operator to steer the construction machine 100. The canopy 123 is provided as a canopy for the operator.

The work machine 124 is arranged on the front side of the upper turning body 120. The work machine 124 includes a boom 124a, an arm 124b, and a bucket 124c. The boom 124a, the arm 124b, and the bucket 124c are driven by a hydraulic device in a well-known manner.

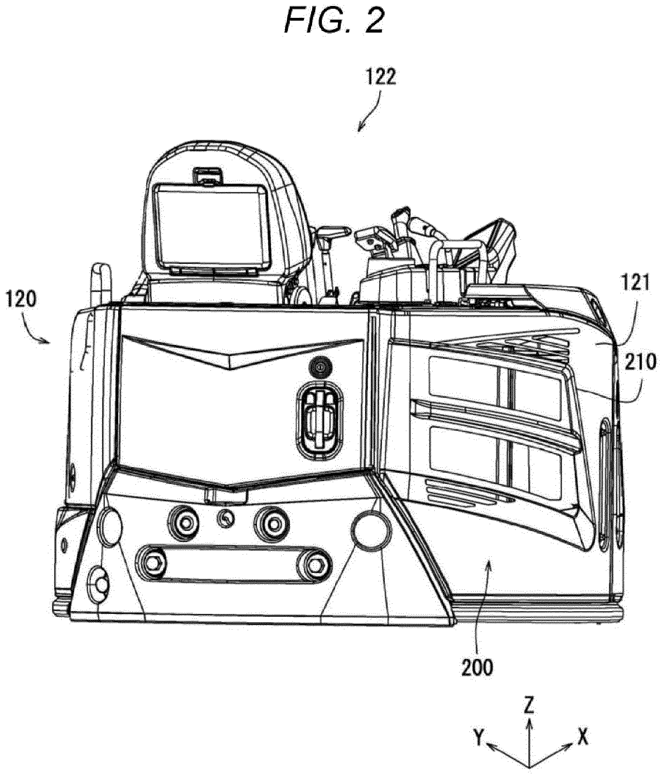

Next, the appearance of a right rear portion of the upper turning body 120 will be described with reference to Figs. 1 and 2. Fig. 2 is a view showing an example of the appearance of the right rear portion of the upper turning body 120.

As shown in Fig. 2, the hood 121 has an exhaust opening 200. The exhaust opening 200 is covered with a grill 210 having a quadrangular shape.

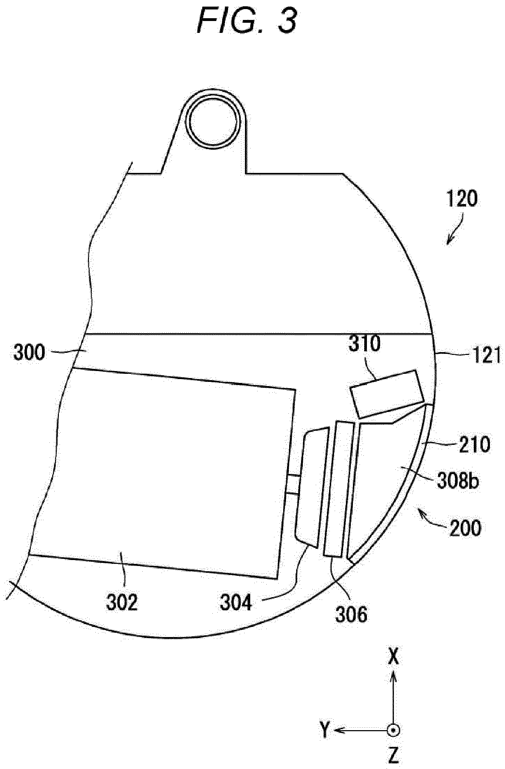

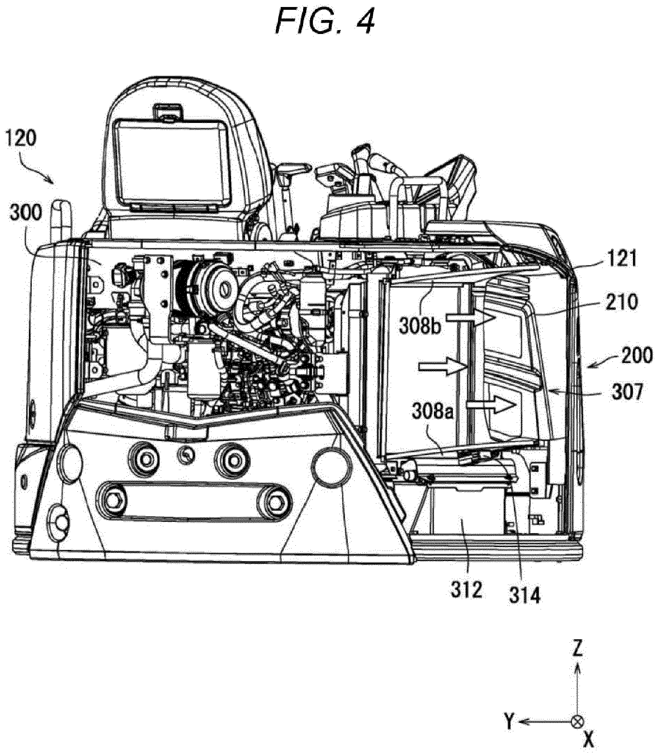

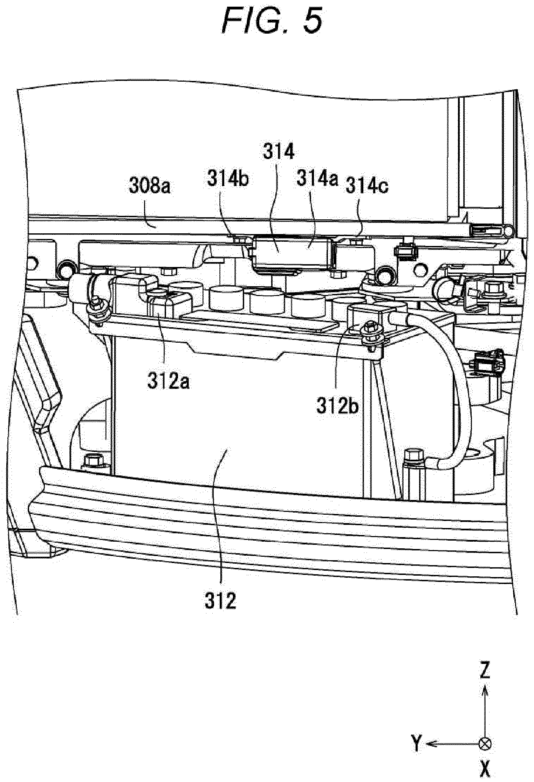

Next, component arrangement in an engine room 300 will be described with reference to Figs. 1 to 5. Fig. 3 is a plan view schematically showing an example of the component arrangement in the engine room 300. Fig. 4 is a view showing a state in which part of the hood 121 is removed from the configuration of Fig. 2, and shows an example of arrangement of a battery 312 and a fuse box 314. Fig. 5 is an enlarged perspective view of the battery 312 and the fuse box 314.

As shown in Figs. 3 and 4, the engine room 300 is defined below a driver's seat by the hood 121. In the engine room 300, an engine 302, a cooling fan 304, a radiator 306, a lower partition plate 308a, an upper partition plate 308b, a hydraulic oil tank 310, the battery 312, and the fuse box 314 are arranged. The radiator 306 is equivalent to an example of a "heat exchanger."

The engine 302 is a power source for the construction machine 100, and, for example, is a diesel engine. The engine 302 has an electric device. The cooling fan 304 and a not-shown hydraulic oil pump are assembled to an output shaft of the engine 302. The radiator 306 is arranged between the cooling fan 304 and the exhaust opening 200, and is supplied with coolant for the engine 302. Air sucked through a not-shown suction opening by the suction force of the cooling fan 304 passes through the engine 302, and exchanges heat with the radiator 306. The lower partition plate 308a and the upper partition plate 308b are plates having a substantially triangular shape. One side of each of the lower partition plate 308a and the upper partition plate 308b is curved so as to contact the inner surface of the hood 121. The hydraulic oil tank 310 is arranged adjacent to the lower partition plate 308a and the upper partition plate 308b on the machine body front side, and stores hydraulic oil discharged from the hydraulic oil pump.

As shown in Fig. 4, the lower partition plate 308a and the upper partition plate 308b form an air discharge passage 307 between the radiator 306 and the exhaust opening 200. Moreover, the lower partition plate 308a and the upper partition plate 308b are inclined upward in a direction from the radiator 306 toward the exhaust opening 200. Thus, the direction of air discharged from the hood 121 through the exhaust opening 200 is obliquely upward as indicated by arrows in Fig. 4.

The battery 312 is arranged in a space below the lower partition plate 308a, and supplies power to the electric device of the engine 302. The fuse box 314 is attached to the surface, which faces downward, of the lower partition plate 308a at a position adjacent to the hood 121, and is connected to a circuit connecting the electric device of the engine 302 and the battery 312 to each other.

As shown in Fig. 5, the battery 312 has a positive terminal 312a and a negative terminal 312b. The fuse box 314 is arranged in a space between the positive terminal 312a and the negative terminal 312b.

The fuse box 314 has a center portion 314a, a first attachment portion 314b at one end, and a second attachment portion 314c at the other end. The fuse box 314 is attached to the surface, which faces downward, of the lower partition plate 308a through the first attachment portion 314b and the second attachment portion 314c, and the center portion 314a is separated from the lower partition plate 308a in order to dissipate heat.

The fuse box 314 houses a first fuse and a second fuse. The first fuse is connected to a circuit that discharges the current of the battery 312. The first fuse includes a fuse connected to a circuit of a starting motor for starting the engine 302. Moreover, the first fuse includes a fuse connected to a circuit of a glow plug for easily starting the engine 302 in a cold state. The second fuse is connected to a circuit that charges the battery 312. The second fuse includes a fuse connected to a circuit of an alternator which is a generator.

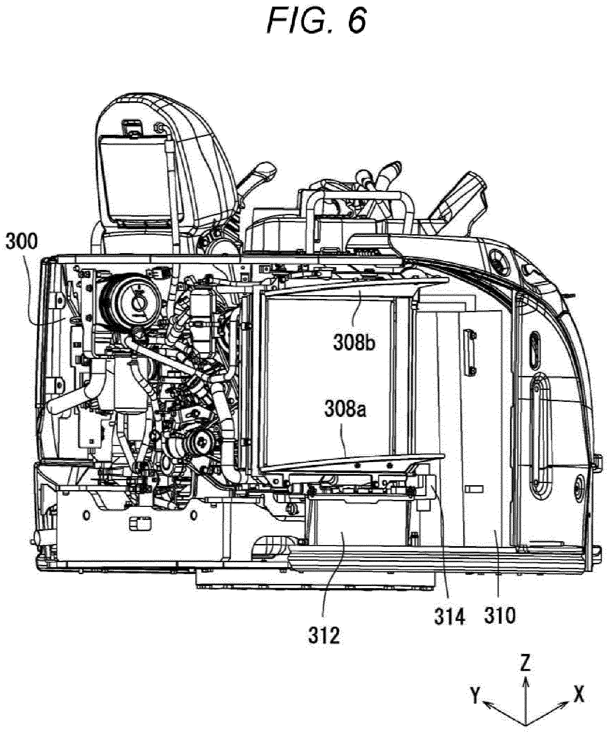

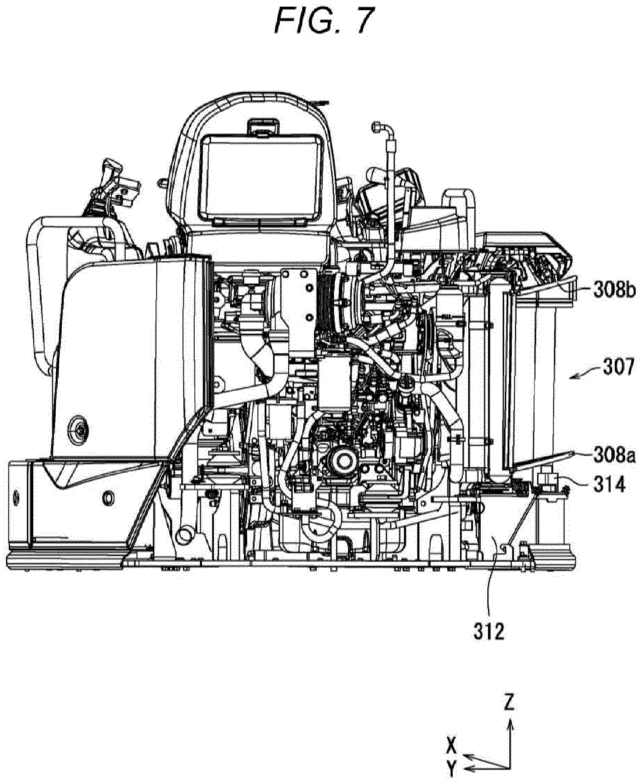

Next, another example of the arrangement of the battery 312 and the fuse box 314 will be described with reference to Figs. 1 to 3, 6, and 7. Fig. 6 is a view showing another example of the arrangement of the battery 312 and the fuse box 314. Fig. 7 is a view showing the battery 312 and the fuse box 314 of Fig. 6 from another direction.

As shown in Figs. 6 and 7, the fuse box 314 is arranged, together with the battery 312, at a position adjacent to the hood 121 in a space below the lower partition plate 308a. Specifically, the fuse box 314 is attached to the side surface of the hydraulic oil tank 310 adjacent to the battery 312.

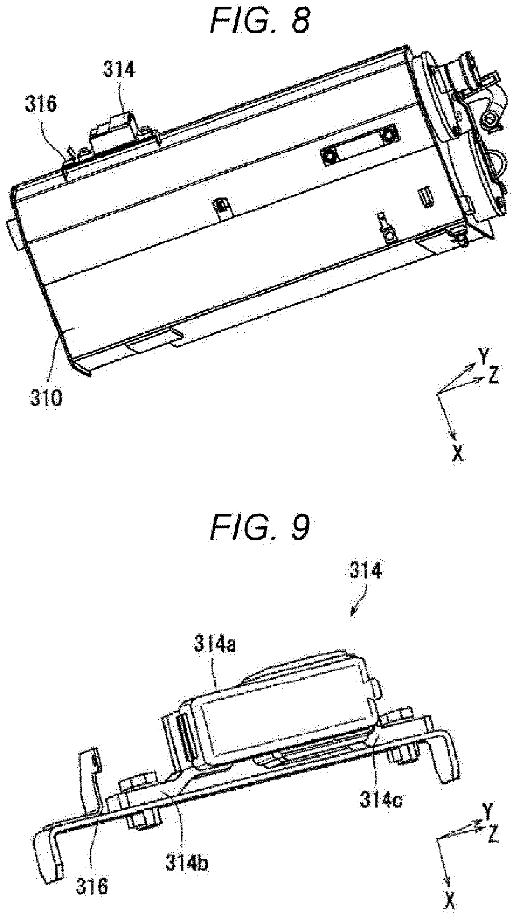

Fig. 8 is an enlarged perspective view of the hydraulic oil tank 310 and the fuse box 314. Fig. 9 is an enlarged perspective view of the fuse box 314 and a mounting bracket 316.

As shown in Figs. 8 and 9, the mounting bracket 316 is interposed between the fuse box 314 and the hydraulic oil tank 310. The fuse box 314 is attached to the surface of the mounting bracket 316 through the first attachment portion 314b and the second attachment portion 314c, and the center portion 314a is separated from the mounting bracket 316 in order to dissipate heat. The mounting bracket 316 has two legs, and these legs are welded to the side surface of the hydraulic oil tank 310.

According to the above-described embodiment, the lower partition plate 308a and the upper partition plate 308b form the air discharge passage 307, and the battery 312 is arranged in the space below the lower partition plate 308a. Moreover, the fuse box 314 is arranged between the lower partition plate 308a and the battery 312. Thus, the construction machine 100 of which the component layout efficiency in the engine room 300 is improved is provided. In addition, the fuse box 314 is easily accessible from the outside, and therefore, maintainability is improved.

The embodiment of the present invention has been described above with reference to the drawings. Note that the present invention is not limited to the above-described embodiment and can be implemented in various forms without departing from the gist of the invention. In addition, various aspects of the invention can be made by appropriately combining a plurality of components disclosed above in the embodiment. For example, some components may be omitted from all the components described in the embodiment. For the sake of easy understanding, the drawings schematically show each component, and, e.g., the number of each component shown may be different from an actual number for the sake of convenience in preparation of the drawings. In addition, each component described above in the embodiment is an example and is not particularly limited, and various changes can be made without substantially departing from the advantageous effects of the present invention.

In the embodiment, the heat exchanger arranged between the cooling fan 304 and the exhaust opening 200 is the radiator 306, but the present invention is not limited thereto. The heat exchanger may be an oil cooler for cooling hydraulic oil.

In the embodiment, the fuse box 314 is attached to the side surface of the hydraulic oil tank 310, but the present invention is not limited thereto. In a case where a fuel tank storing fuel for the engine 302 is located adjacent to the battery 312, the fuse box 314 may be attached to the side surface of the combustion tank.

### INDUSTRIAL APPLICABILITY

The present invention is applicable to the field of construction machines.

### LIST OF REFERENCE SIGNS

- 100: Construction Machine
- 121: Hood
- 200: Exhaust Opening
- 300: Engine Room
- 302: Engine
- 304: Cooling Fan
- 306: Radiator (Heat Exchanger)
- 307: Air Discharge Passage
- 308a: Lower Partition Plate
- 308b: Upper Partition Plate
- 310: Hydraulic Oil Tank
- 312: Battery
- 312a: Positive Terminal
- 312b: Negative Terminal
- 314: Fuse Box
- 314a: Center Portion
- 314b: First Attachment Portion
- 314c: Second Attachment Portion
- 316: Mounting Bracket

## Claims

1. A construction machine (100) comprising:
an engine (302) that has an electric device;
a cooling fan (304) that is assembled to the engine;
a hood (121) that has an exhaust opening (200);
a heat exchanger (306) that is arranged between the cooling fan (304) and the exhaust opening (200);
a partition plate that forms an air discharge passage (307) between the heat exchanger (306) and the exhaust opening (200); and
a battery (312) that is arranged in a space below the partition plate;
**characterized in that** the construction machine (100) further comprises:
a fuse box (314) that is connected to a circuit connecting the electric device and the battery (312) to each other,
wherein the fuse box (314) is arranged between the battery (312) and the partition plate.

2. The construction machine (100) according to claim 1, wherein the fuse box (314) is attached to a surface of the partition plate.

3. The construction machine (100) according to claim 2, wherein
the fuse box (314) has a center portion (314a) and attachment portions at both ends, and
the fuse box (314) is arranged on the partition plate through the attachment portions, and the center portion (314a) is separated from the partition plate.

4. The construction machine (100) according to any one of claims 1 to 3, wherein the fuse box (314) is arranged in a space between a positive terminal (312a) and a negative terminal (312b) of the battery (312).

5. The construction machine (100) according to any one of claims 1 to 4, wherein
the fuse box (314) houses
a first fuse that is connected to a circuit that discharges a current of the battery (312); and
a second fuse that is connected to a circuit that charges the battery (312).

6. The construction machine (100) according any one of claims 1 to 5, wherein the partition plate is inclined upward in a direction from the heat exchanger (306) toward the exhaust opening (200).

## Patentansprüche

1. Baumaschine (100), umfassend:
einen Motor (302), der eine elektrische Vorrichtung aufweist;
ein Kühlgebläse (304), das an dem Motor montiert ist;
eine Haube (121), die eine Auspufföffnung (200) aufweist;
einen Wärmetauscher (306), der zwischen dem Kühlgebläse (304) und der Auspufföffnung (200) angeordnet ist;
eine Unterteilungsplatte, die einen Luftentladedurchgang (307) zwischen dem Wärmetauscher (306) und der Auspufföffnung (200) ausbildet; und
eine Batterie (312), die in einem Raum unter der Unterteilungsplatte angeordnet ist;
**gekennzeichnet dadurch, dass** die Baumaschine (100) ferner Folgendes umfasst:
einen Sicherungskasten (314), der mit einer Schaltung verbunden ist, die die elektrische Vorrichtung und die Batterie (312) miteinander verbindet,
wobei der Sicherungskasten (314) zwischen der Batterie (312) und der Unterteilungsplatte angeordnet ist.

2. Baumaschine (100) nach Anspruch 1, wobei der Sicherungskasten (314) an einer Fläche der Unterteilungsplatte befestigt ist.

3. Baumaschine (100) nach Anspruch 2, wobei
der Sicherungskasten (314) einen Mittelteil (314a) und Befestigungsteile an beiden Enden aufweist, und
der Sicherungskasten (314) durch die Befestigungsteile auf der Unterteilungsplatte angeordnet ist und der Mittelteil (314a) von der Unterteilungsplatte getrennt ist.

4. Baumaschine (100) nach einem der Ansprüche 1 bis 3, wobei der Sicherungskasten (314) in einem Raum zwischen einem positiven Anschluss (312a) und einem negativen Anschluss (312b) der Batterie (312) angeordnet ist.

5. Baumaschine (100) nach einem der Ansprüche 1 bis 4, wobei der Sicherungskasten (314) Folgendes beherbergt:
eine erste Sicherung, die mit einer Schaltung verbunden ist, die einen Strom der Batterie (312) entlädt; und
eine zweite Sicherung, die mit einer Schaltung verbunden ist, die die Batterie (312) lädt.

6. Baumaschine (100) nach einem der Ansprüche 1 bis 5, wobei die Unterteilungsplatte nach oben in eine Richtung von dem Wärmetauscher (306) zu der Auspufföffnung (200) hin geneigt ist.

## Revendications

1. Machine de construction (100) comprenant :
un moteur (302) qui présente un dispositif électrique ;
un ventilateur de refroidissement (304) qui est assemblé au moteur ;
un capot (121) qui présente une ouverture d'échappement (200) ;
un échangeur de chaleur (306) qui est disposé entre le ventilateur de refroidissement (304) et l'ouverture d'échappement (200) ;
une plaque de séparation qui forme un passage d'évacuation d'air (307) entre l'échangeur de chaleur (306) et l'ouverture d'échappement (200) ; et
une batterie (312) qui est disposée dans un espace au-dessous de la plaque de séparation ;
**caractérisée en ce que** la machine de construction (100) comprend en outre :
un boîtier à fusibles (314) qui est connecté à un circuit reliant le dispositif électrique et la batterie (312) l'un à l'autre,
dans laquelle le boîtier à fusibles (314) est disposé entre la batterie (312) et la plaque de séparation.

2. Machine de construction (100) selon la revendication 1, dans laquelle le boîtier à fusibles (314) est fixé à une surface de la plaque de séparation.

3. Machine de construction (100) selon la revendication 2, dans laquelle
le boîtier à fusibles (314) présente une partie centrale (314a) et des parties de fixation aux deux extrémités, et
le boîtier à fusibles (314) est disposé sur la plaque de séparation par l'intermédiaire des parties de fixation, et la partie centrale (314a) est séparée de la plaque de séparation.

4. Machine de construction (100) selon l'une quelconque des revendications 1 à 3, dans laquelle le boîtier à fusibles (314) est disposé dans un espace entre une borne positive (312a) et une borne négative (312b) de la batterie (312).

5. Machine de construction (100) selon l'une quelconque des revendications 1 à 4,
dans laquelle le boîtier à fusibles (314) loge
un premier fusible qui est connecté à un circuit qui décharge un courant de la batterie (312) ; et
un deuxième fusible qui est connecté à un circuit qui charge la batterie (312).

6. Machine de construction (100) selon l'une quelconque des revendications 1 à 5, dans laquelle la plaque de séparation est inclinée vers le haut dans une direction allant de l'échangeur de chaleur (306) vers l'ouverture d'échappement (200).
